(19) Europäisches Patentamt
European Patent Office
Office européen des brevets

(11) **EP 3 301 643 A1**

(12) **EUROPEAN PATENT APPLICATION**

(43) Date of publication:
**04.04.2018 Bulletin 2018/14**

(51) Int Cl.:
*G06T 7/20* (2017.01)    *G06T 7/246* (2017.01)
*G06T 7/292* (2017.01)   *H04N 19/51* (2014.01)
*H04N 19/176* (2014.01)  *H04N 19/597* (2014.01)

(21) Application number: **16306267.2**

(22) Date of filing: **30.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **GALPIN, Franck**
  **35576 CESSON-SEVIGNE (FR)**
• **RACAPE, Fabien**
  **35576 CESSON-SEVIGNE (FR)**
• **LELEANNEC, Fabrice**
  **35576 CESSON-SEVIGNE (FR)**

(74) Representative: **Huchet, Anne**
**TECHNICOLOR**
**1-5, rue Jeanne d'Arc**
**92130 Issy-les-Moulineaux (FR)**

(54) **METHOD AND APPARATUS FOR RECTIFIED MOTION COMPENSATION FOR OMNIDIRECTIONAL VIDEOS**

(57)    An improvement in the coding efficiency resulting from improving the motion vector compensation process of omnidirectional videos is provided, which uses a mapping *f* to map the frame F to encode to the surface S which is used to render a frame. The corners of a block on a surface are rectified to map to a coded frame which can be used to render a new frame. Various embodiments include rectifying pixels and using a separate motion vector for each group of pixels. In another embodiment, motion vectors can be expressed in polar coordinates, with an affine model, using mapped projection or an overlapped block motion compensation model.

FIG. 21(A)    FIG. 21(B)    FIG. 21(C)    FIG. 21(D)

EP 3 301 643 A1

**Description**

FIELD OF THE INVENTION

Aspects of the described embodiments relate to rectified motion compensation for omnidirectional videos.

BACKGROUND OF THE INVENTION

Recently there has been a growth of available large field-of-view content (up to 360°). Such content is potentially not fully visible by a user watching the content on immersive display devices such as Head Mounted Displays, smart glasses, PC screens, tablets, smartphones and the like. That means that at a given moment, a user may only be viewing a part of the content. However, a user can typically navigate within the content by various means such as head movement, mouse movement, touch screen, voice and the like. It is typically desirable to encode and decode this content.

SUMMARY OF THE INVENTION

According to an aspect of the present principles, there is provided a method for rectified motion compensation for omnidirectional videos. The method comprises steps for decoding a video image block by predicting an omnidirectional video image block using motion compensation, wherein motion compensation comprises: computing block corners of said video image block using a block center point and a block height and width and obtaining an image of corners and a center point of the video image block on a parametric surface by using a block warping function on the computed block corners. The method further comprises steps for obtaining three dimensional corners by transformation from corners on the parametric surface to a three dimensional surface, obtaining three dimensional offsets of each three dimensional corner of the block relative to the center point of the block on the three dimensional surface, computing an image of the motion compensated block on the parametric surface by using the block warping function and on a three dimensional surface by using the transformation and a motion vector for the video image block. The method further comprises computing three dimensional coordinates of the video image block's motion compensated corners using the three dimensional offsets, and computing an image of said motion compensated corners from a reference frame by using an inverse block warping function and inverse transformation.

According to another aspect of the present principles, there is provided an apparatus. The apparatus comprises a memory and a processor. The processor is configured to decode a video image block by predicting an omnidirectional video image block using motion compensation, wherein motion compensation comprises: computing block corners of said video image block using a block center point and a block height and width and obtaining an image of corners and a center point of the video image block on a parametric surface by using a block warping function on the computed block corners. The method further comprises steps for obtaining three dimensional corners by transformation from corners on the parametric surface to a three dimensional surface, obtaining three dimensional offsets of each three dimensional corner of the block relative to the center point of the block on the three dimensional surface, computing an image of the motion compensated block on the parametric surface by using the block warping function and on a three dimensional surface by using the transformation and a motion vector for the video image block. The method further comprises computing three dimensional coordinates of the video image block's motion compensated corners using the three dimensional offsets, and computing an image of said motion compensated corners from a reference frame by using an inverse block warping function and inverse transformation.

According to another aspect of the present principles, there is provided a method for rectified motion compensation for omnidirectional videos. The method comprises steps for encoding a video image block by predicting an omnidirectional video image block using motion compensation, wherein motion compensation comprises:

computing block corners of said video image block using a block center point and a block height and width and obtaining an image of corners and a center point of the video image block on a parametric surface by using a block warping function on the computed block corners. The method further comprises steps for obtaining three dimensional corners by transformation from corners on the parametric surface to a three dimensional surface, obtaining three dimensional offsets of each three dimensional corner of the block relative to the center point of the block on the three dimensional surface, computing an image of the motion compensated block on the parametric surface by using the block warping function and on a three dimensional surface by using the transformation and a motion vector for the video image block. The method further comprises computing three dimensional coordinates of the video image block's motion compensated corners using the three dimensional offsets, and computing an image of said motion compensated corners from a reference frame by using an inverse block warping function and inverse transformation.

According to another aspect of the present principles, there is provided an apparatus. The apparatus comprises a memory and a processor. The processor is configured to encode a video image block by predicting an omnidirectional video image block using motion compensation, wherein motion compensation comprises: computing block corners of said video image block using a block center point and a block height and width and obtaining an image of corners and a center point of the video image block on a parametric surface by using a block warping function on the computed block corners. The method further comprises steps for obtaining three dimensional corners by transformation from corners on the parametric surface to a three dimensional surface, obtaining three dimensional offsets of each three dimensional corner of the block relative to the center point of the block on the three dimensional surface, computing an image of the motion compensated block on the parametric surface by using the block warping function and on a three dimensional surface by using the transformation and a motion vector for the video image block. The method further comprises computing three dimensional coordinates of the video image block's motion compensated corners using the three dimensional offsets, and computing an image of said motion compensated corners from a reference frame by using an inverse block warping function and inverse transformation.

These and other aspects, features and advantages of the present principles will become apparent from the following detailed description of exemplary embodiments, which is to be read in connection with the accompanying drawings.

BRIEF DESCRIPTION OF THE DRAWINGS

Figure 1 shows a general overview of an encoding and decoding system according to one general aspect of the embodiments.

Figure 2 shows one embodiment of a decoding system according to one general aspect of the embodiments.

Figure 3 shows a first system, for processing augmented reality, virtual reality, augmented virtuality or their content system according to one general aspect of the embodiments.

Figure 4 shows a second system, for processing augmented reality, virtual reality, augmented virtuality or their content system according to another general aspect of the embodiments.

Figure 5 shows a third system, for processing augmented reality, virtual reality, augmented virtuality or their content system using a smartphone according to another general aspect of the embodiments.

Figure 6 shows a fourth system, for processing augmented reality, virtual reality, augmented virtuality or their content system using a handheld device and sensors according to another general aspect of the embodiments.

Figure 7 shows a system, for processing augmented reality, virtual reality, augmented virtuality or their content system incorporating a video wall, according to another general aspect of the embodiments.

Figure 8 shows a system, for processing augmented reality, virtual reality, augmented virtuality or their content system using a video wall and sensors, according to another general aspect of the embodiments.

Figure 9 shows a system, for processing augmented reality, virtual reality, augmented virtuality or their content system with game consoles, according to another general aspect of the embodiments.

Figure 10 shows another embodiment of an immersive video rendering device according to the invention.

Figure 11 shows another embodiment of an immersive video rendering device according to another general aspect of the embodiments.

Figure 12 shows another embodiment of an immersive video rendering device according to another general aspect of the embodiments.

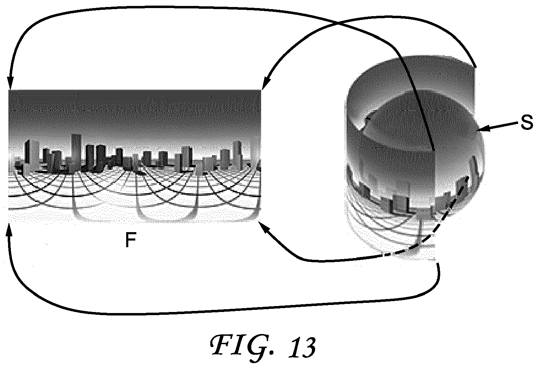

Figure 13 shows mapping from a sphere surface to a frame using an equirectangular projection, according to a general aspect of the embodiments.

Figure 14 shows an example of equirectangular frame layout for omnidirectional video, according to a general aspect of the embodiments.

Figure 15 shows mapping from a cube surface to the frame using a cube mapping, according to a general aspect of the embodiments.

Figure 16 shows an example of cube mapping frame layout for omnidirectional videos, according to a general aspect of the embodiments.

Figure 17 shows other types of projection sphere planes, according to a general aspect of the embodiments.

Figure 18 shows a frame and the three dimensional (3D) surface coordinate system for a sphere and a cube, according to a general aspect of the embodiments.

Figure 19 shows an example of a moving object moving along a straight line in a scene and the resultant apparent motion in a rendered frame.

Figure 20 shows motion compensation using a transformed block, according to a general aspect of the embodiments.

Figure 21 shows block warping based motion compensation, according to a general aspect of the embodiments.

Figure 22 shows examples of block motion compensation by block warping, according to a general aspect of the embodiments.

Figure 23 shows polar parametrization of a motion vector, according to a general aspect of the embodiments.

Figure 24 shows an affine motion vector and a sub-block case, according to a general aspect of the embodiments.

Figure 25 shows affine mapped motion compensation, according to a general aspect of the embodiments.

Figure 26 shows an overlapped block motion compensation example.

Figure 27 shows approximation of a plane with a sphere, according to a general aspect of the embodiments.

Figure 28 shows two examples of possible layout of faces of a cube mapping, according to a general aspect of the embodiments.

Figure 29 shows frame of reference for the picture F and the surface S, according to a general aspect of the embodiments.

Figure 30 shows mapping of a cube surface S to 3D space, according to a general aspect of the embodiments.

Figure 31 shows one embodiment of a method, according to a general aspect of the embodiments.

Figure 32 shows one embodiment of an apparatus, according to a general aspect of the embodiments.

DETAILED DESCRIPTION

An approach for improved motion compensation for omnidirectional video is described herein.

Embodiments of the described principles concern a system for virtual reality, augmented reality or augmented virtuality, a head mounted display device for displaying virtual reality, augmented reality or augmented virtuality, and a processing device for a virtual reality, augmented reality or augmented virtuality system.

The system according to the described embodiments aims at processing and displaying content, from augmented reality to virtual reality, so also augmented virtuality as well. The content can be used for gaming or watching or interacting with video content. So by virtual reality system, we understand here that the embodiments is also related to augmented reality system, augmented virtuality system.

Immersive videos are gaining in use and popularity, especially with new devices like a Head Mounted Display (HMD) or with the use of interactive displays, for example, a tablet. As a first step, consider the encoding of such video for omnidirectional videos, an important part of the immersive video format. Here, assume that the omnidirectional video is in a format such that the projection of the surrounding three dimensional (3D) surface S can be projected into a standard rectangular frame suitable for a current video coder/decoder (codec). Such a projection will inevitably introduce some challenging effects on the video to encode, which can include strong geometrical distortions, straight lines that are not straight anymore, an orthonormal coordinate system that is not orthonormal anymore, and a non-uniform pixel density. Non-uniform pixel density means that a pixel in the frame to encode does not always represent the same surface on the surface to encode, that is, the same surface on the image during a rendering phase.

Additional challenging effects are strong discontinuities, such that the frame layout will introduce strong discontinuities between two adjacent pixels on the surface, and some periodicity that can occur in the frame, for example, from one border to the opposite one.

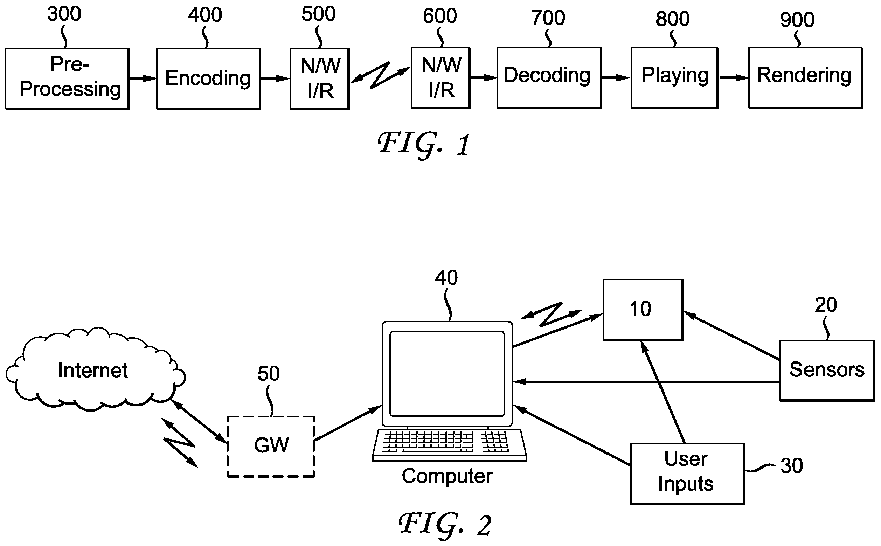

Figure 1 illustrates a general overview of an encoding and decoding system according to an example embodiment of the invention. The system of figure 1 is a functional system. A pre-processing module 300 may prepare the content for encoding by the encoding device 400. The pre-processing module 300 may perform multi-image acquisition, merging of the acquired multiple images in a common space (typically a 3D sphere if we encode the directions), and mapping of the 3D sphere into a 2D frame using, for example, but not limited to, an equirectangular mapping or a cube mapping. The pre-processing module 300 may also accept an omnidirectional video in a particular format (for example, equirectangular) as input, and pre-processes the video to change the mapping into a format more suitable for encoding. Depending on the acquired video data representation, the pre-processing module 300 may perform a mapping space change. The encoding device 400 and the encoding method will be described with respect to other figures of the specification.

After being encoded, the data, which may encode immersive video data or 3D CGI encoded data for instance, are sent to a network interface 500, which can be typically implemented in any network interface, for instance present in a gateway. The data are then transmitted through a communication network, such as internet but any other network can be foreseen. Then the data are received via network interface 600. Network interface 600 can be implemented in a gateway, in a television, in a set-top box, in a head mounted display device, in an immersive (projective) wall or in any immersive video rendering device. After reception, the data are sent to a decoding device 700. Decoding function is one of the processing functions described in the following figures 2 to 12. Decoded data are then processed by a player 800. Player 800 prepares the data for the rendering device 900 and may receive external data from sensors or users input data. More precisely, the player 800 prepares the part of the video content that is going to be displayed by the rendering device 900. The decoding device 700 and the player 800 may be integrated in a single device (e.g., a smartphone, a game console, a STB, a tablet, a computer, etc.). In a variant, the player 800 is integrated in the rendering device 900.

Several types of systems may be envisioned to perform the decoding, playing and rendering functions of an immersive display device, for example when rendering an immersive video.

A first system, for processing augmented reality, virtual reality, or augmented virtuality content is illustrated in figures 2 to 6. Such a system comprises processing functions, an immersive video rendering device which may be a head-mounted display (HMD), a tablet or a smartphone for example and may comprise sensors. The immersive video rendering device may also comprise additional interface modules between the display device and the processing functions. The processing functions can be performed by one or several devices. They can be integrated into the immersive video rendering device or they can be integrated into one or several processing devices. The processing device comprises one or several processors and a communication interface with the immersive video rendering device, such as a wireless or wired communication interface.

The processing device can also comprise a second communication interface with a wide access network such as internet and access content located on a cloud, directly or through a network device such as a home or a local gateway. The processing device can also access a local storage through a third interface such as a local access network interface of Ethernet type. In an embodiment, the processing device may be a computer system having one or several processing units. In another embodiment, it may be a smartphone which can be connected through wired or wireless links to the immersive video rendering device or which can be inserted in a housing in the immersive video rendering device and communicating with it through a connector or wirelessly as well. Communication interfaces of the processing device are wireline interfaces (for example a bus interface, a wide area network interface, a local area network interface) or wireless interfaces (such as a IEEE 802.11 interface or a Bluetooth® interface). When the processing functions are performed by the immersive video rendering device, the immersive video rendering device can be provided with an interface to a network directly or through a gateway to receive and/or transmit content.

In another embodiment, the system comprises an auxiliary device which communicates with the immersive video rendering device and with the processing device. In such an embodiment, this auxiliary device can contain at least one of the processing functions.

The immersive video rendering device may comprise one or several displays. The device may employ optics such as lenses in front of each of its display. The display can also be a part of the immersive display device like in the case of smartphones or tablets. In another embodiment, displays and optics may be embedded in a helmet, in glasses, or in a visor that a user can wear. The immersive video rendering device may also integrate several sensors, as described later on. The immersive video rendering device can also comprise several interfaces or connectors. It might comprise one or several wireless modules in order to communicate with sensors, processing functions, handheld or other body parts related devices or sensors.

The immersive video rendering device can also comprise processing functions executed by one or several processors and configured to decode content or to process content. By processing content here, it is understood all functions to prepare a content that can be displayed. This may comprise, for instance, decoding a content, merging content before displaying it and modifying the content to fit with the display device.

One function of an immersive content rendering device is to control a virtual camera which captures at least a part of the content structured as a virtual volume. The system may comprise pose tracking sensors which totally or partially track the user's pose, for example, the pose of the user's head, in order to process the pose of the virtual camera. Some positioning sensors may track the displacement of the user. The system may also comprise other sensors related to environment for example to measure lighting, temperature or sound conditions. Such sensors may also be related to the users' bodies, for instance, to measure sweating or heart rate. Information acquired through these sensors may be used to process the content. The system may also comprise user input devices (e.g. a mouse, a keyboard, a remote control, a joystick). Information from user input devices may be used to process the content, manage user interfaces or to control the pose of the virtual camera. Sensors and user input devices communicate with the processing device and/or with the immersive rendering device through wired or wireless communication interfaces.

Through figures 2 to 6, several embodiments of this first type of system for displaying augmented reality, virtual reality, augmented virtuality or any content from augmented reality to virtual reality.

Figure 2 illustrates a particular embodiment of a system configured to decode, process and render immersive videos. The system comprises an immersive video rendering device 10, sensors 20, user inputs devices 30, a computer 40 and a gateway 50 (optional).

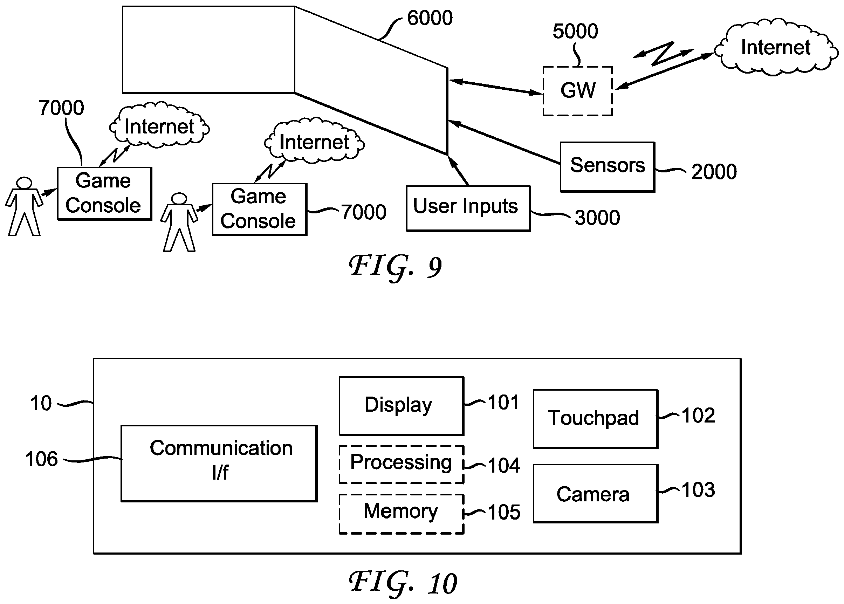

The immersive video rendering device 10, illustrated on Figure 10, comprises a display 101. The display is, for example of OLED or LCD type. The immersive video rendering device 10 is, for instance a HMD, a tablet or a smartphone. The device 10 may comprise a touch surface 102 (e.g. a touchpad or a tactile screen), a camera 103, a memory 105 in connection with at least one processor 104 and at least one communication interface 106. The at least one processor 104 processes the signals received from the sensors 20. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement. Data from sensors 20 and user input devices 30 can also be transmitted to the computer 40 which will process the data according to the input of these sensors.

Memory 105 comprises parameters and code program instructions for the processor 104. Memory 105 can also comprise parameters received from the sensors 20 and user input devices 30. Communication interface 106 enables the immersive video rendering device to communicate with the computer 40. The Communication interface 106 of the processing device is wireline interfaces (for example a bus interface, a wide area network interface, a local area network interface) or wireless interfaces (such as a IEEE 802.11 interface or a Bluetooth® interface). Computer 40 sends data and optionally control commands to the immersive video rendering device 10. The computer 40 is in charge of processing the data, i.e. prepare them for display by the immersive video rendering device 10. Processing can be done exclusively by the computer 40 or part of the processing can be done by the computer and part by the immersive video rendering device 10. The computer 40 is connected to internet, either directly or through a gateway or network interface 50. The computer 40 receives data representative of an immersive video from the internet, processes these data (e.g. decodes them and possibly prepares the part of the video content that is going to be displayed by the immersive video rendering device 10) and sends the processed data to the immersive video rendering device 10 for display. In a variant, the system may also comprise local storage (not represented) where the data representative of an immersive video are stored, said local storage can be on the computer 40 or on a local server accessible through a local area network for instance (not represented).

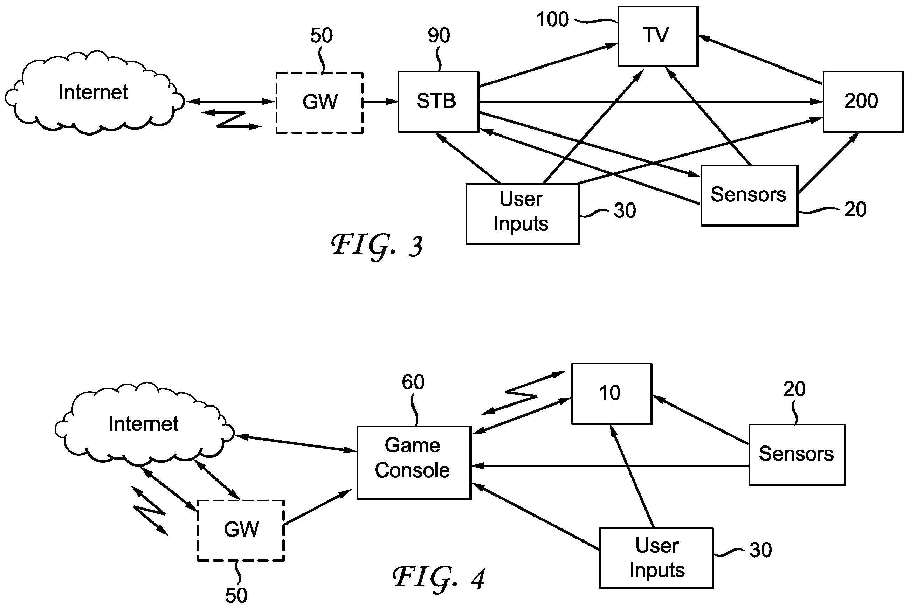

Figure 3 represents a second embodiment. In this embodiment, a STB 90 is connected to a network such as internet directly (i.e. the STB 90 comprises a network interface) or via a gateway 50. The STB 90 is connected through a wireless interface or through a wired interface to rendering devices such as a television set 100 or an immersive video rendering device 200. In addition to classic functions of a STB, STB 90 comprises processing functions to process video content for rendering on the television 100 or on any immersive video rendering device 200. These processing functions are the same as the ones that are described for computer 40 and are not described again here. Sensors 20 and user input devices 30 are also of the same type as the ones described earlier with regards to Figure 2. The STB 90 obtains the data representative of the immersive video from the internet. In a variant, the STB 90 obtains the data representative of the immersive video from a local storage (not represented) where the data representative of the immersive video are stored.

Figure 4 represents a third embodiment related to the one represented in Figure 2. The game console 60 processes the content data. Game console 60 sends data and optionally control commands to the immersive video rendering device 10. The game console 60 is configured to process data representative of an immersive video and to send the processed data to the immersive video rendering device 10 for display. Processing can be done exclusively by the game console 60 or part of the processing can be done by the immersive video rendering device 10.

The game console 60 is connected to internet, either directly or through a gateway or network interface 50. The game console 60 obtains the data representative of the immersive video from the internet. In a variant, the game console 60 obtains the data representative of the immersive video from a local storage (not represented) where the data representative of the immersive video are stored, said local storage can be on the game console 60 or on a local server accessible through a local area network for instance (not represented).

The game console 60 receives data representative of an immersive video from the internet, processes these data (e.g. decodes them and possibly prepares the part of the video that is going to be displayed) and sends the processed data to the immersive video rendering device 10 for display. The game console 60 may receive data from sensors 20 and user input devices 30 and may use them to process the data representative of an immersive video obtained from the internet or from the from the local storage.

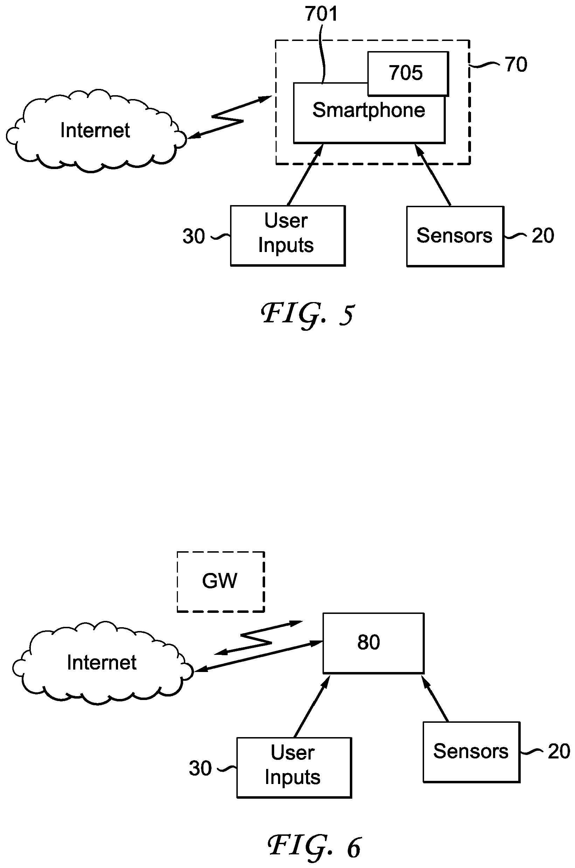

Figure 5 represents a fourth embodiment of said first type of system where the immersive video rendering device 70 is formed by a smartphone 701 inserted in a housing 705. The smartphone 701 may be connected to internet and thus may obtain data representative of an immersive video from the internet. In a variant, the smartphone 701 obtains data representative of an immersive video from a local storage (not represented) where the data representative of an immersive video are stored, said local storage can be on the smartphone 701 or on a local server accessible through a local area network for instance (not represented).

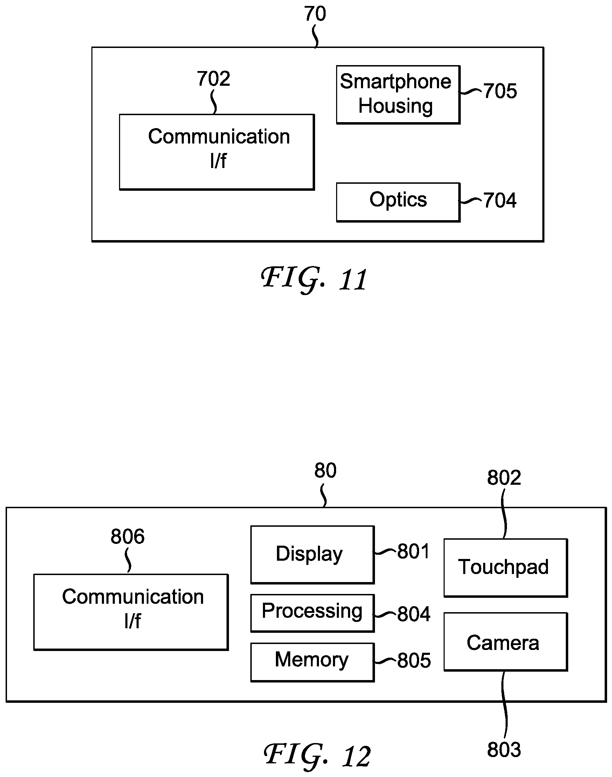

Immersive video rendering device 70 is described with reference to Figure 11 which gives a preferred embodiment of immersive video rendering device 70. It optionally comprises at least one network interface 702 and the housing 705 for the smartphone 701. The smartphone 701 comprises all functions of a smartphone and a display. The display of the smartphone is used as the immersive video rendering device 70 display. Therefore there is no need of a display other than the one of the smartphone 701. However, there is a need of optics 704, such as lenses to be able to see the data on the smartphone display. The smartphone 701 is configured to process (e.g. decode and prepare for display) data representative of an immersive video possibly according to data received from the sensors 20 and from user input devices 30. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement.

Figure 6 represents a fifth embodiment of said first type of system where the immersive video rendering device 80 comprises all functionalities for processing and displaying the data content. The system comprises an immersive video rendering device 80, sensors 20 and user input devices 30. The immersive video rendering device 80 is configured to process (e.g. decode and prepare for display) data representative of an immersive video possibly according to data received from the sensors 20 and from the user input devices 30. The immersive video rendering device 80 may be connected to internet and thus may obtain data representative of an immersive video from the internet. In a variant, the immersive video rendering device 80 obtains data representative of an immersive video from a local storage (not represented) where the data representative of an immersive video are stored, said local storage can be on the rendering device 80 or on a local server accessible through a local area network for instance (not represented).

The immersive video rendering device 80 is illustrated on Figure 12. The immersive video rendering device comprises a display 801. The display can be for example of OLED or LCD type, a touchpad (optional) 802, a camera (optional) 803, a memory 805 in connection with at least one processor 804 and at least one communication interface 806. Memory 805 comprises parameters and code program instructions for the processor 804. Memory 805 can also comprise parameters received from the sensors 20 and user input devices 30. Memory can also be large enough to store the data representative of the immersive video content. For this several types of memories can exist and memory 805 can be a single memory or can be several types of storage (SD card, hard disk, volatile or non-volatile memory...) Communication interface 806 enables the immersive video rendering device to communicate with internet network. The processor 804 processes data representative of the video in order to display them of display 801. The camera 803 captures images of the environment for an image processing step. Data are extracted from this step in order to control the immersive video rendering device.

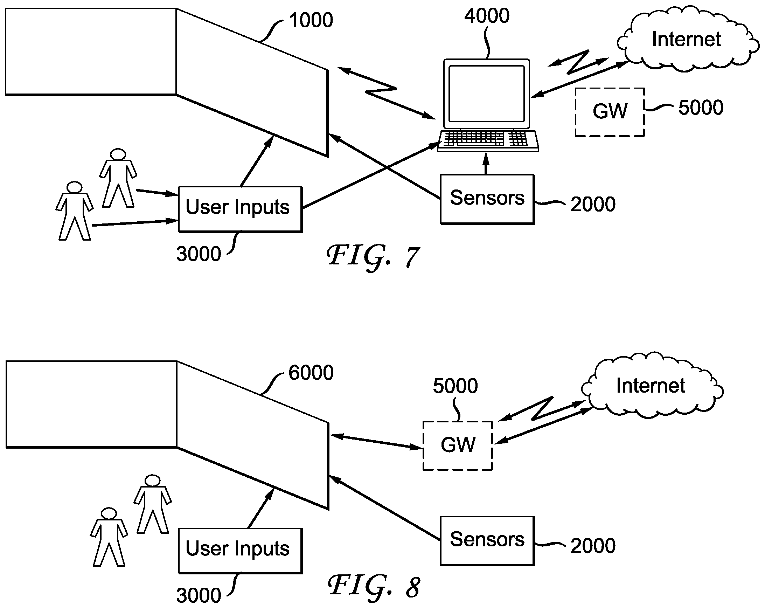

A second type of virtual reality system, for displaying augmented reality, virtual reality, augmented virtuality or any content from augmented reality to virtual reality is illustrated in Figures 7 to 9, can also be of immersive (projective) wall type. In such a case, the system comprises one display, usually of huge size, where the content is displayed. The virtual reality system comprises also one or several processing functions to process the content received for displaying it and network interfaces to receive content or information from the sensors.

The display can be of LCD, OLED, or some other type and can comprise optics such as lenses. The display can also comprise several sensors, as described later. The display can also comprise several interfaces or connectors. It can comprise one or several wireless modules in order to communicate with sensors, processors, and handheld or other body part related devices or sensors.

The processing functions can be in the same device as the display or in a separate device or for part of it in the display and for part of it in a separate device.

By processing content here, one can understand all functions required to prepare a content that can be displayed. This can include or not decoding content, merging content before displaying it, modifying the content to fit with the display device, or some other processing.

When the processing functions are not totally included in the display device, the display device is able to communicate with the display through a first communication interface such as a wireless or wired interface.

Several types of processing devices can be envisioned. For instance, one can imagine a computer system having one or several processing units. One can also see a smartphone which can be connected through wired or wireless links to the display and communicating with it through a connector or wirelessly as well.

The processing device can also comprise a second communication interface with a wide access network such as internet and access to content located on a cloud, directly or through a network device such as a home or a local gateway. The processing device can also access to a local storage through a third interface such as a local access network interface of Ethernet type.

Sensors can also be part of the system, either on the display itself (cameras, microphones, for example) or positioned into the display environment (light sensors, touchpads, for example). Other interactive devices can also be part of the system such as a smartphone, tablets, remote controls or hand-held devices.

The sensors can be related to environment sensing; for instance lighting conditions, but can also be related to human body sensing such as positional tracking. The sensors can be located in one or several devices. For instance, there can be one or several environment sensors located in the room measuring the lighting conditions or temperature or any other physics parameters. There can be sensors related to the user which can be in handheld devices, in chairs (for instance where the person is sitting), in the shoes or feet of the users, and on other parts of the body. Cameras, microphone can also be linked to or in the display. These sensors can communicate with the display and/or with the processing device via wired or wireless communications.

The content can be received by the virtual reality system according to several embodiments.

The content can be received via a local storage, such as included in the virtual reality system (local hard disk, memory card, for example) or streamed from the cloud.

The following paragraphs describe some embodiments illustrating some configurations of this second type of system for displaying augmented reality, virtual reality, augmented virtuality or any content from augmented reality to virtual reality. Figures 5 to 7 illustrate these embodiments.

Figure 7 represents a system of the second type. It comprises a display 1000 which is an immersive (projective) wall which receives data from a computer 4000. The computer 4000 may receive immersive video data from the internet. The computer 4000 is usually connected to internet, either directly or through a gateway 5000 or network interface. In a variant, the immersive video data are obtained by the computer 4000 from a local storage (not represented) where the data representative of an immersive video are stored, said local storage can be in the computer 4000 or in a local server accessible through a local area network for instance (not represented).

This system may also comprise sensors 2000 and user input devices 3000.The immersive wall 1000 can be of OLED or LCD type. It can be equipped with one or several cameras. The immersive wall 1000 may process data received from the sensor 2000 (or the plurality of sensors 2000). The data received from the sensors 2000 may be related to lighting conditions, temperature, environment of the user, e.g. position of objects.

The immersive wall 1000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

Sensors 2000 and user input devices 3000 data may also be transmitted to the computer 4000. The computer 4000 may process the video data (e.g. decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection.

Computer 4000 sends the processed data and optionally control commands to the immersive wall 1000. The computer 4000 is configured to process the data, i.e. preparing them for display, to be displayed by the immersive wall 1000. Processing can be done exclusively by the computer 4000 or part of the processing can be done by the computer 4000 and part by the immersive wall 1000.Figure 8 represents another system of the second type. It comprises an immersive (projective) wall 6000 which is configured to process (e.g. decode and prepare data for display) and display the video content. It further comprises sensors 2000, user input devices 3000.

The immersive wall 6000 receives immersive video data from the internet through a gateway 5000 or directly from internet. In a variant, the immersive video data are obtained by the immersive wall 6000 from a local storage (not represented) where the data representative of an immersive video are stored, said local storage can be in the immersive wall 6000 or in a local server accessible through a local area network for instance (not represented).

This system may also comprise sensors 2000 and user input devices 3000.The immersive wall 6000 can be of OLED or LCD type. It can be equipped with one or several cameras. The immersive wall 6000 may process data received from the sensor 2000 (or the plurality of sensors 2000). The data received from the sensors 2000 may be related to lighting conditions, temperature, environment of the user, e.g. position of objects.

The immersive wall 6000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

The immersive wall 6000 may process the video data (e.g. decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection. The immersive wall 6000 may comprise at least one communication interface to communicate with the sensors and with internet.Figure 9 illustrates a third embodiment where the immersive wall is used for gaming. One or several gaming consoles 7000 are connected, preferably through a wireless interface to the immersive wall 6000. The immersive wall 6000 receives immersive video data from the internet through a gateway 5000 or directly from internet. In a variant, the immersive video data are obtained by the immersive wall 6000 from a local storage (not represented) where the data representative of an immersive video are stored, said local storage can be in the immersive wall 6000 or in a local server accessible through a local area network for instance (not represented).

Gaming console 7000 sends instructions and user input parameters to the immersive wall 6000. Immersive wall 6000 processes the immersive video content possibly according to input data received from sensors 2000 and user input devices 3000 and gaming consoles 7000 in order to prepare the content for display. The immersive wall 6000 may also comprise internal memory to store the content to be displayed.

The following sections address the encoding of the so-called omnidirectional/$4\pi$ steradians/immersive videos by improving the performance of the motion compensation inside the codec. Assume that a rectangular frame corresponding to the projection of a full, or partial, 3D surface at infinity, or rectified to look at infinity, is being encoded by a video codec. The present proposal is to adapt the motion compensation process in order to adapt to the layout of the frame in order to improve performances of the codec. These adaptions are done assuming minimal changes on current video codec, typically by encoding a rectangular frame.

Omnidirectional video is one term used to describe the format used to encode $4\pi$ steradians, or sometimes a sub part of the whole 3D surface, of the environment. It aims at being visualized, ideally, in an HMD or on a standard display using some interacting device to "look around". The video, may or may not, be stereoscopic as well.

Other terms are sometimes used to design such videos: VR, 360, panoramic, $4\pi$ steradians, immersive, but they are not always referring to same format.

More advanced format (embedding 3D information etc.) can also be referred with the same terms, and may or may not, be compatible in principles described here.

In practice, the 3D surface used for the projection is convex and simple, for example, a sphere, a cube, a pyramid.

The present ideas can also be used in case of standard images acquired with very large field of view, for example, a very small focal length like a fish eye lens.

As an example, we show the characteristics of 2 possible frame layout for omnidirectional videos:

| Type | Equirectangular (fig 1) | Cube mapping (fig 2) |
|---|---|---|
| 3D surface | sphere | cube |
| Straight lines | Continuously distorted | Piece wise straight |
| Orthonormal local frame | no | Yes, except on face boundaries |
| Pixel density | Non uniform (higher on equator line) | Almost constant |
| Discontinuities | no | Yes, on each face boundaries |
| Periodicity | Yes, horizontal | Yes, between some faces |

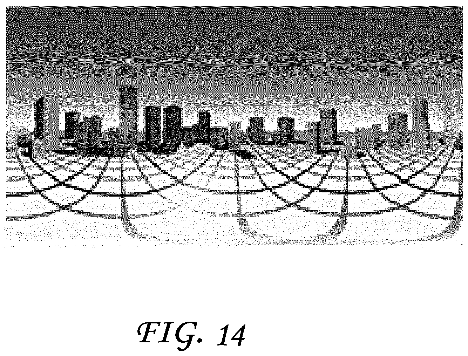

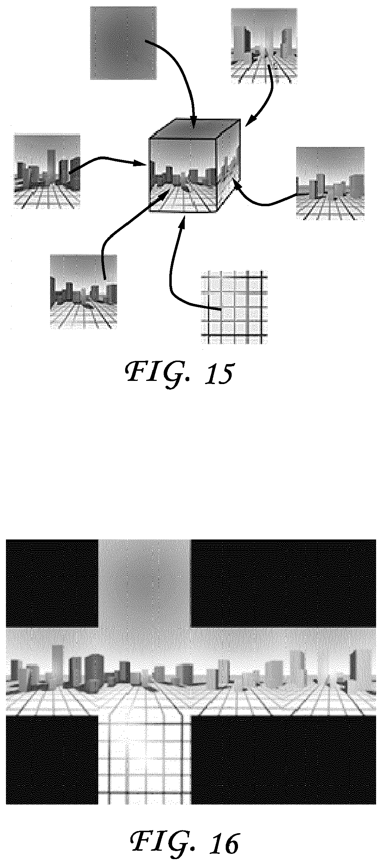

Figure 14 shows the mapping from the surface to the frame used for the two mappings. Figure 14 and Figure 16 show the resulting frame to encode.

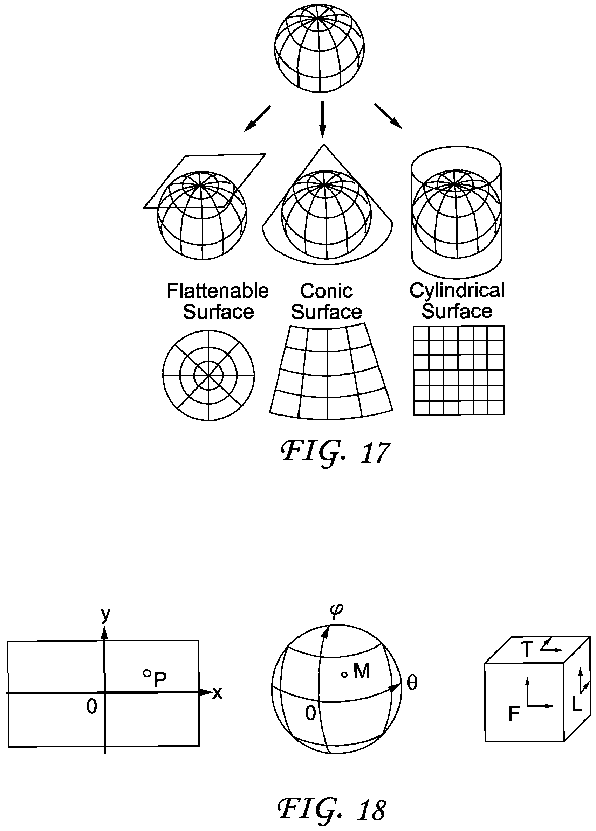

Figure 18 shows the coordinate system used for the frame (left) and the surface (middle/right). A pixel P(x,y) in the frame F corresponds on the sphere to the point M($\theta,\varphi$). Denote by:

F the encoder frame, i.e. the frame sent to the encoder

S: the surface at infinity which is mapped to the frame F

G: a rendering frame: this is a frame found when rendering from a certain viewpoint, i.e. by fixing the angles ($\theta,\varphi$) of the viewpoint. The rendering frame properties depends on the final display (HMD, TV screen etc.): horizontal and vertical field of view, resolution in pixel etc. For some 3D surfaces like the cube, the pyramid etc., the parametrization of the 3D surface is not continuous but is defined piece-wise (typically by face).

The next section first describes the problem for a typical layout of omnidirectional video, the equirectangular layout, but the general principle is applicable to any mapping from the 3D surface S to the rectangular frame F. The same principle applies for example to the cube mapping layout.

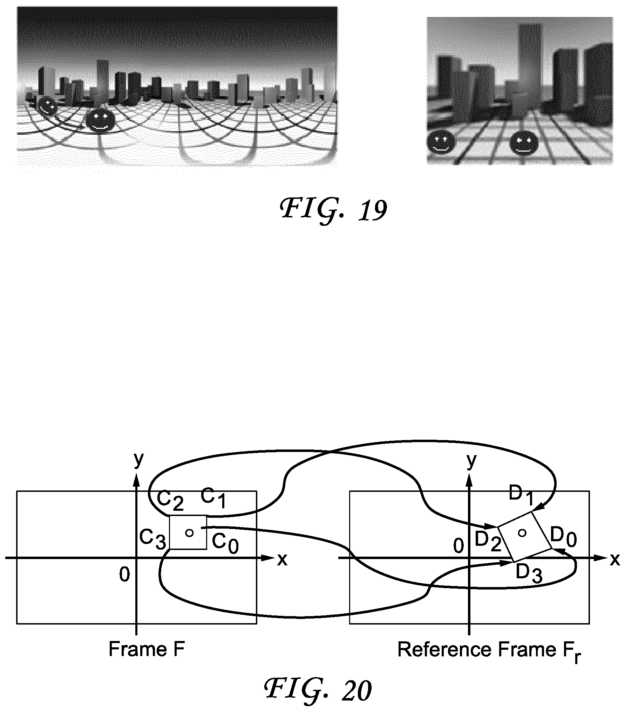

Figure 19 shows an example of an object moving along a straight line in the scene and the resulting apparent motion in the rendered frame. As one can notice, even if the motion is perfectly straight in the rendered image, the frame to encode shows a non-uniform motion, including zoom and rotation in the rendered frame. As the existing motion compensation uses pure translational square blocks to compensate the motion as a default mode, it is not suitable for such warped videos.

The described embodiments herein propose to adapt the motion compensation process of existing video codecs such as HEVC, based on the layout of the frame.

Note that the particular layout chosen to map the frame to encode to the sphere is fixed by sequence and can be signaled at a sequence level, for instance in the Sequence Parameter Set (SPS) of HEVC.

The following sections describe how to perform motion compensation (or estimation as an encoding tool) using an arbitrary frame layout.

A first solution assumes that each block's motion is represented by a single vector. In this solution, a motion model is computed for the block from the four corners of the block, as shown in the example of Figure 20.

The following process steps are applied at decoding time, knowing the current motion vector of the block dP. The same process can be applied at encoding time when testing a candidate motion vector dP.

For a current block i size, inputs are:

The block center coordinates P, the block size 2*dw and 2*dh, and the block motion vector dP.

Output is the image of each corner of the current block after motion compensation $D_i$,

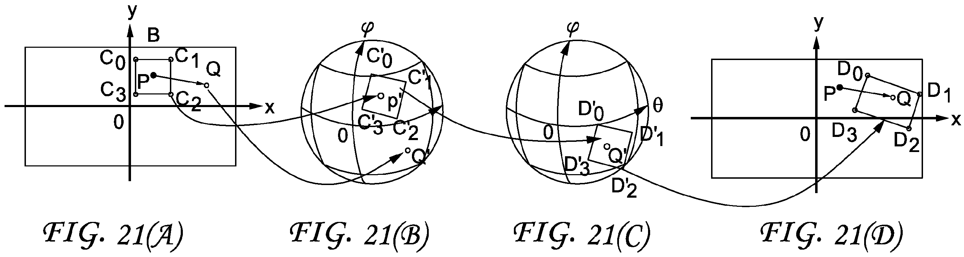

The image of each corner is computed as follows (see Figure 21):

1 Compute the image Q of P after motion compensation (Figure 21 a):

$$Q = P + dP$$

2 For each corner $C_i$ of the block B at P (Figure 21 a), compute the image $C_i'$ of the corner on the surface, and the image $P_i'$ of P on the surface (Figure 21 b):

$$C_0 = P - dw - dh$$

$$C_1 = P + dw - dh$$

$$C_2 = P + dw + dh$$

$$C_3 = P - dw + dh$$

$$C_i' = f(C_i)$$

$$P' = f(P)$$

With dw and dh the half block size in width and height.

3 Compute the 3D points in the Cartesian coordinate system of the points $C_i^{3d}$ of $C_i'$ and $P_i^{3d}$ of $P_i'$ (Figure 21 b):

$$C_i^{3d} = 3d(C_i')$$

$$P^{3d} = 3d(P')$$

4 Compute the 3D offsets of each corner relatively to the center (Figure 21 b):

$$dC_i^{3d} = C_i^{3d} - P^{3d}$$

5 Compute the image Q' and then $Q^{3d}$ of Q (Figure 21 c):

$$Q' = f(Q)$$

$$Q^{3d} = 3d(Q')$$

6 Compute the 3D corners $D^{3d}$ from $Q^{3d}$ using the previously computed 3D offsets (Figure 21 c):

$$D_i^{3d} = Q^{3d} + dC_i^{3d}$$

7 Compute back the inverse image of each displaced corners (Figure 21 d):

$$D_i' = 3d^{-1}(D_i^{3d})$$

$$D_i = f^{-1}(D_i')$$

The plane of the block is approximated by the sphere patch in the case of equirectangular mapping. For cube mapping, for example, there is no approximation.

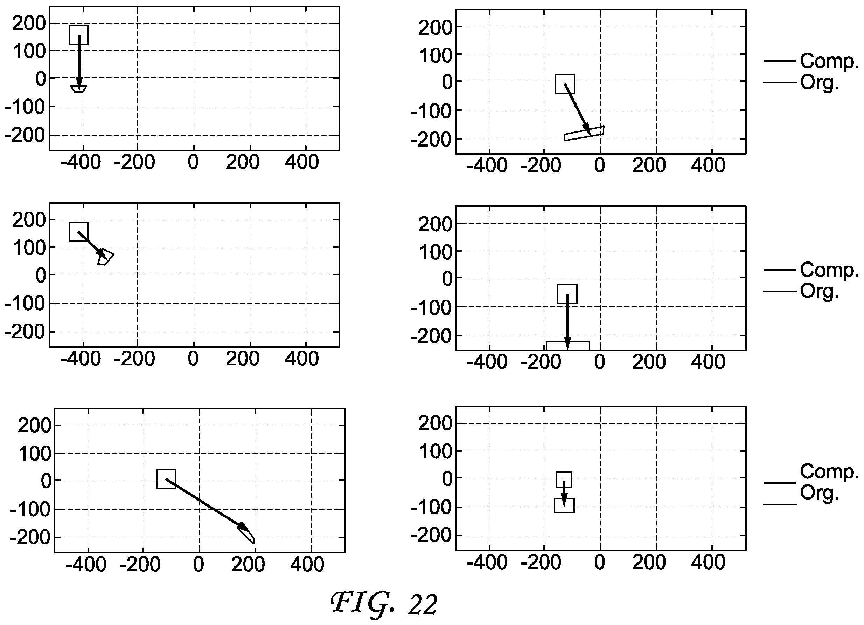

Figure 22 shows the results of block based warping motion compensation for equirectangular layout. Figure 22 shows the block to motion predict and the block to wrap back from the reference picture computed using the above method.

A second solution is a variant of the first solution, but instead of rectifying only the four corners and warping the block for motion compensation, each pixel is rectified individually.

In the process of the first solution, the computation for the corners is replaced by the computation of each pixel or group of pixels, for example, a 4x4 block in HEVC.

A third solution is motion compensation using pixel based rectification with one motion vector per pixels/group of pixels. A motion vector predictor per pixel/group of pixels can be obtained. This predictor $dP_i$ is then used to form a motion vector $V_i$ per pixel $P_i$ adding the motion residual (MVd):

$$V_i = dP_i + MVd$$

A fourth solution is with polar coordinates based motion vector parametrization. The motion vector of a block can be expressed in polar coordinates $d\theta$, $d\varphi$.

The process to motion compensate the block can then be as follows:

1 Compute the image P' of P on the surface and the 3D point $P^{3d}$ of P' :

$$P' = f(P)$$

$$P^{3d} = 3d(P')$$

2 Rotate the point $P^{3d}$ using the motion vector $d\theta$, $d\varphi$:

$$Q^{3d} = R.P^{3d}$$

With R the rotation matrix with polar angles $d\theta$, $d\varphi$. We can then apply the process of solution 1, using the computed $Q^{3d}$ :

$$C_i^{3d} = 3d(C_i')$$

$$P^{3d} = 3d(P')$$

$$dC_i^{3d} = C_i^{3d} - P^{3d}$$

$$D_i^{3d} = Q^{3d} + dC_i^{3d}$$

$$D_i' = 3d^{-1}(D_i^{3d})$$

$$D_i = f^{-1}(D_i')$$

As the motion vector is now expressed in polar coordinates, the unit is changed, depending on the mapping. The unit is found using the mapping function f. For equirectangular mapping, a unit of one pixel in the image correspond to an angle of $2\pi$/width, where width is the image width.

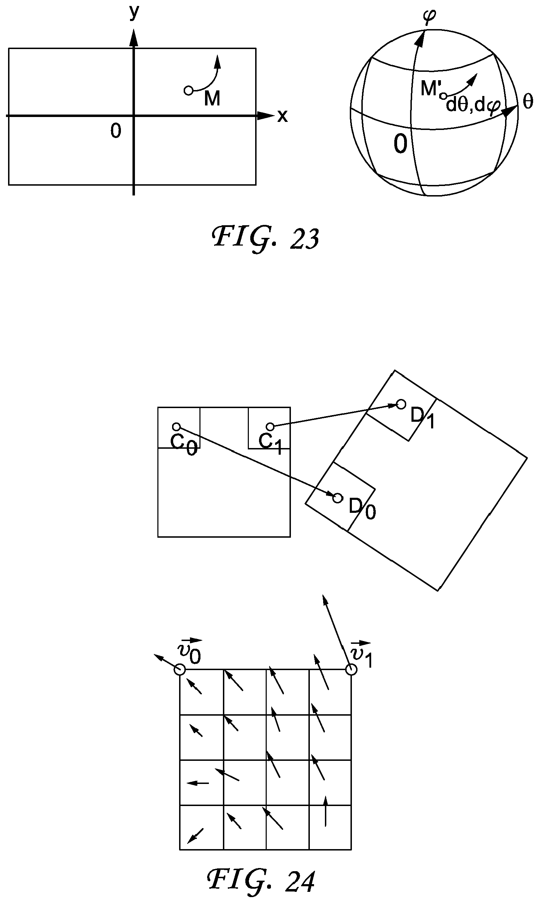

In the case of an existing affine motion compensation model, two vectors are used to derive the affine motion of the current block, as shown in Figure 24.

$$dV = \begin{bmatrix} v_x \\ v_y \end{bmatrix}$$

$$\begin{cases} v_x = \dfrac{(v_{1x} - v_{0x})}{w} x - \dfrac{(v_{1y} - v_{0y})}{w} y + v_{0x} \\ v_y = \dfrac{(v_{1y} - v_{0y})}{w} x + \dfrac{(v_{1x} - v_{0x})}{w} y + v_{0y} \end{cases}$$

where (v0x, v0y) is the motion vector of the top-left corner control point, and (v1x, v1 y) is the motion vector of the top-right corner control point.

Each pixel (or each sub-block) of the block has a motion vector computed with the above equations.

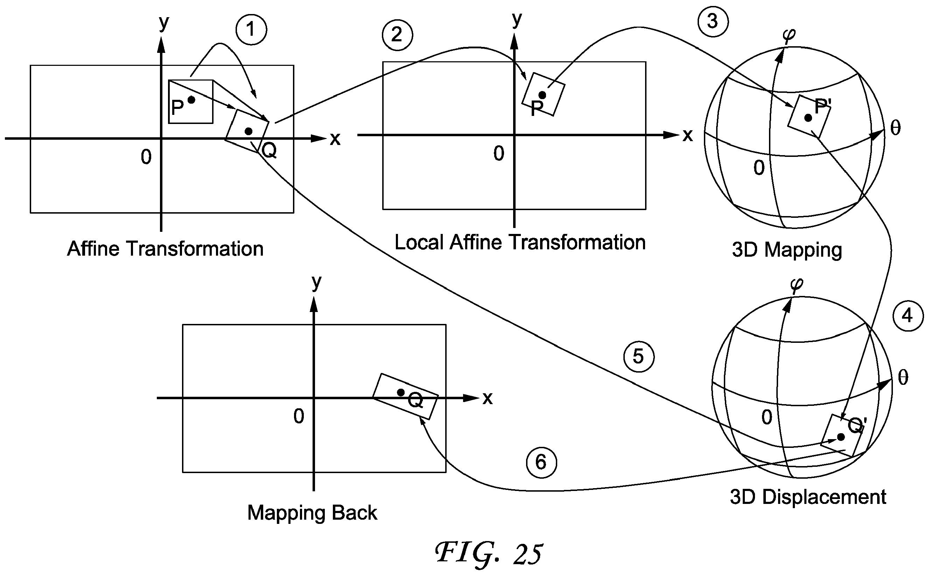

In the case of mapped projection, the method to motion compensate the block can be adapted as follows and as shown in Figure 25. First, the local affine transformation is computed. Second, the transformed block is mapped-projected and back.

1 Compute the image Q of the center of the block P after affine motion compensation:

$$\begin{cases} v_x^P = \dfrac{v_{1x} + v_{0x} - v_{1y} + v_{oy}}{2} \\ v_y^P = \dfrac{v_{1y} + v_{0y} + v_{1x} - v_{ox}}{2} \end{cases}$$

$$Q = P + dP = P + \begin{bmatrix} v_x^P \\ v_y^P \end{bmatrix}$$

2 Compute the 3D point image of P:

$$P' = f(P)$$

$$P^{3d} = 3d(P')$$

3 For each sub-block or pixel compute the local affine transform of the sub-block/pixel:

$$dV_L = dV - dP$$

4 Compute the local transformed of each sub-block:

$$V_L = V + dV_L$$

5 Compute the 3D points of each locally transformed sub-block:

$$V_L' = f(V_L)$$

$$V_L^{3d} = 3d(V_L')$$

6 Compute the 3D offsets of each sub-block relatively to the center P:

$$dV_L{}^{3d} = V_L^{3d} - P^{3d}$$

7 Compute the image Q' and then Q$^{3d}$ of Q:

$$Q' = f(Q)$$

$$Q^{3d} = 3d(Q')$$

8 Compute the 3D points W$^{3d}$ from Q$^{3d}$ using the previously computed 3D offsets:

$$W^{3d} = Q^{3d} + dV_L^{3d}$$

9 Compute back the inverse image of each displaced sub-blocks:

$$W' = 3d^{-1}(W^{3d})$$

$$W = f^{-1}(W')$$

W is then the point coordinate in the reference picture of the point to motion compensate.

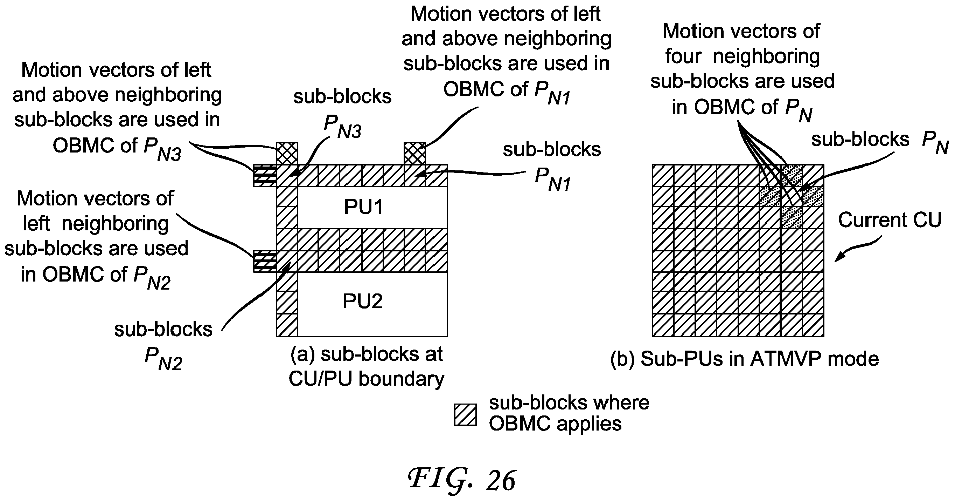

In OBMC mode, the weighted sum of several sub-blocks compensated with the current motion vector as well as the motion vectors of neighboring blocks is computed, as shown in Figure 26.

A possible adaptation to this mode is to first rectify the motion vector of the neighboring blocks in the local frame of the current block before doing the motion compensations of the sub-blocks.

Some variations of the aforementioned schemes can include Frame Rate Up Conversion (FRUC) using pattern matched motion vector derivation that can use the map/unmap search estimation, bi-directional optical flow (BIO), Local illumination compensation (LIC) with equations that are similar to intra prediction, and Advanced temporal motion vector prediction (ATMVP).

The advantage of the described embodiments and their variants is an improvement in the coding efficiency resulting from improving the motion vector compensation process of omnidirectional videos which use a mapping *f* to map the frame *F* to encode to the surface *S* which is used to render a frame.

Mapping from the frame F to the 3D surface S can now be described. 21 shows an equirectangular mapping. Such a mapping defined the function f as follow:

$$f: M(x,y) \rightarrow M'(\theta, \varphi)$$

$$\theta = x$$

$$\varphi = y$$

A pixel M(x,y) in the frame F is mapped on the sphere at point M'($\theta$,$\varphi$), assuming normalized coordinates.

Note: with non-normalized coordinates:

$$\theta = \frac{2\pi \left( x - \frac{w}{2} \right)}{w}$$

$$\varphi = \frac{\pi \left( \frac{h}{2} - y \right)}{h}$$

Mapping from the surface S to the 3D space can now be described. Given a point M(x,y) in F mapped in M'($\theta$,$\varphi$) on the sphere (18):

The projective coordinates of $M^{3d}$ are given by:

$$3d: M' \rightarrow M^{3d}$$

$$M^{3d} = \begin{bmatrix} \omega \sin\left(\varphi - \frac{\pi}{2}\right)\cos(\theta) \\ \omega \sin\left(\varphi - \frac{\pi}{2}\right)\sin(\theta) \\ \omega \cos(\varphi - \frac{\pi}{2}) \\ \omega \end{bmatrix}$$

In order to go back to the frame F from a point $M^{3d}$, the inverse transform $T^{-1}$ is computed:

$$T^{-1}: M^{3d} \rightarrow M$$

$$M = f^{-1}\left(3d^{-1}(M^{3d})\right)$$

From a point $M^{3d}(X,Y,Z)$, going back to the sphere parametrization by using the standard Cartesian to polar transformation is achieved by the expression of f inverse:

$$3d^{-1}: M^{3d} \rightarrow M'$$

$$\theta = \operatorname{atan}\left(\frac{Y}{X}\right) + \pi$$

$$\varphi = -\text{atan}\left(\frac{\sqrt{X^2 + Y^2}}{Z}\right) + \frac{\pi}{2}$$

and then

$$f^{-1}: M'(\theta, \varphi) \to M(x, y)$$

**Note:** for singular points (typically, at the poles), when X and Y are close to 0, directly set:

$$\theta = 0$$

$$\varphi = \text{sign}(Z)\frac{\pi}{2}$$

**Note:** special care should be done for modular cases.

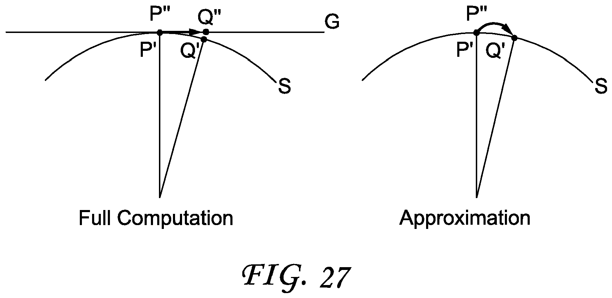

Figure 27 shows approximation of the plane with the sphere. On the left side of the figure is shown full computation, and the right side shows an approximation.

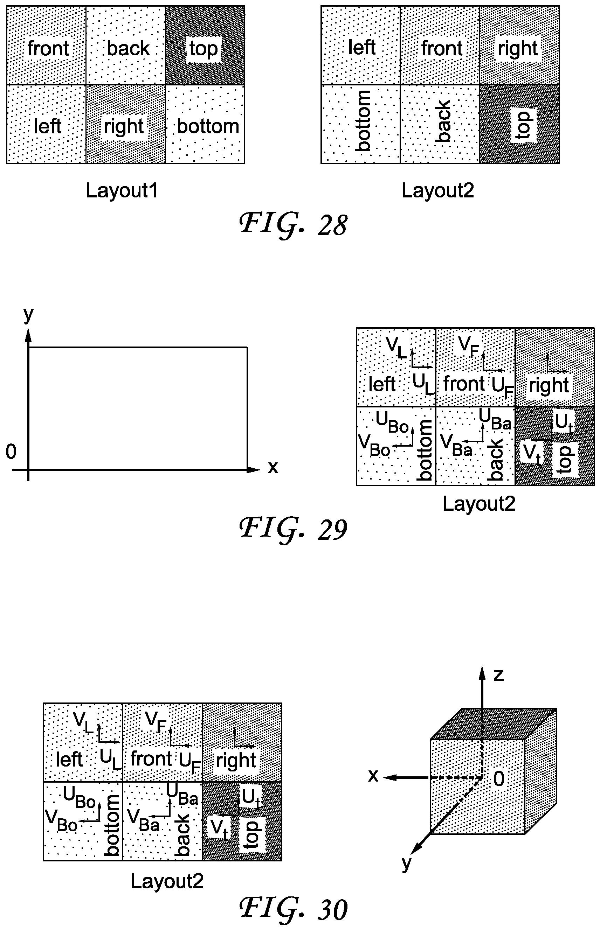

In the case of cube mapping several layout of the faces are possible inside the frame. In Figure 28, we show two examples of layout of the face of the cube map. The mapping from frame F to surface S can now be described.

For all layouts, the mapping function f maps a pixel M(x,y) of the frame F into a point M'(u,v,k) on the 3D surface, where, k is the face number and (u,v) the local coordinate system on the face of the cube S

$$f: M(x, y) \to M'(\text{u}, \text{v}, \text{k})$$

As before, the cube face is defined up to a scale factor, so it is arbitrarily chosen, for example, to have *u, v* ∈ [-1,1].

Here, the mapping is expressed assuming the layout 2 (see Figure 29), but the same reasoning applies to any layout:

$$f\begin{cases} Left: x < w, y > h: u = \dfrac{2x}{w} - 1, v = \dfrac{2(y-h)}{2h} - 1 \ , k = 0 \\[2mm] front: w < x < 2w, y > h: u = \dfrac{2(x-w)}{w} - 1, v = \dfrac{2(y-h)}{2h} - 1, k = 1 \\[2mm] right: 2w < x, y > h: u = \dfrac{2(x-2w)}{w} - 1, v = \dfrac{2(y-h)}{2h} - 1 \ , k = 2 \\[2mm] bottom: x < w, y < h: u = \dfrac{2y}{h} - 1, v = \dfrac{2(w-x)}{2w} - 1, k = 3 \\[2mm] back: w < x < 2w, y < h: u = \dfrac{2y}{h} - 1, v = \dfrac{2(2w-x)}{2w} - 1 \ , k = 4 \\[2mm] top: 2w < x, y < h: u = \dfrac{2y}{h} - 1, v = \dfrac{2(3w-x)}{2w} - 1, k = 5 \end{cases}$$

Where w is one third of the image width and h is half of the image (i.e. the size of a cube face in the picture F). Note that the inverse function f$^{-1}$ is straightforward from the above equations:

$$f^{-1}: M'(u, v, k) \to M(\text{x}, \text{y})$$

Figure 30 shows a mapping from a cube surface S to 3D space. To map from the surface S to the 3D space, the step 2 corresponds to mapping the point in the face k to the 3D point on the cube:

$$3d: M'(u,v,k) \rightarrow M^{3d}(X,Y,Z)$$

$$3d \begin{cases} Left\ (k=0): & X=-1, & Y=u, & Z=v \\ front\ (k=1): X= u, & Y=1, & Z=v \\ right(k=2): & X=1, & Y=-u, & Z=v \\ bottom\ (k=3): X=-u & Y=v, & Z=-1 \\ back\ (k=4): & X=u & Y=-1, & Z=v \\ top\ (k=5): & X=u & Y=v, & Z=-1 \end{cases}$$

Note that the inverse function 3d$^{-1}$ is straightforward from the above equations:

$$3d^{-1}: M^{3d}(X,Y,Z) \rightarrow M'(u,v,k)$$

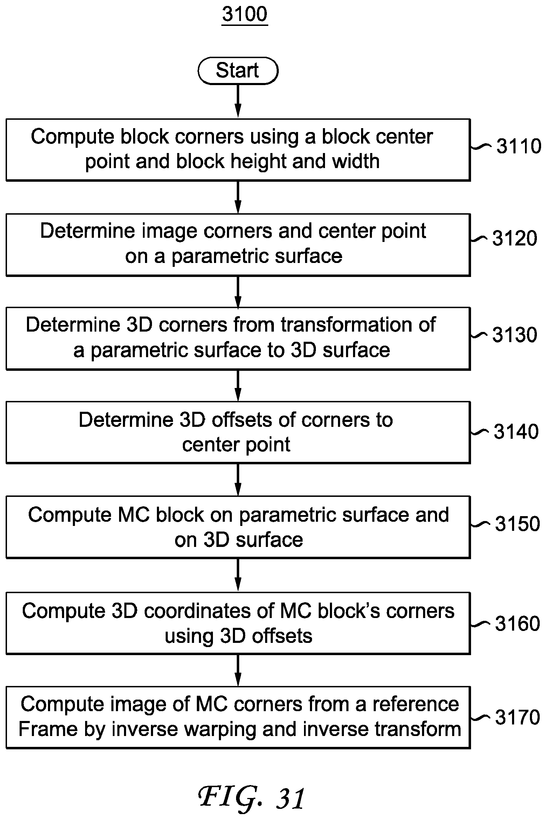

One embodiment of a method for improved motion vector compensation is shown in Figure 31. The method 3100 commences at Start block 3101 and control proceeds to block 3110 for computing block corners using a block center point and a block height and width. Control proceeds from block 3110 to block 3120 for obtaining image corners and a center point of the block on a parametric surface. Control proceeds from block 3120 to block 3130 for obtaining three dimensional corners from a transformation of points on a parametric surface to a three dimensional surface. Control proceeds from block 3130 to block 3140 for obtaining three dimensional offsets of corners to the center point of the block. Control proceeds from block 3140 to block 3150 for computing the motion compensated block on a parametric surface and on a three dimensional surface. Control proceeds from block 3160 to block 3170 for computing an image of the motion compensated block corners from a reference frame by inverse warping and an inverse transform.

The aforementioned method is performed as a decoding operation when decoding a video image block by predicting an omnidirectional video image block using motion compensation, wherein the aforementioned method is used for motion compensation.

The aforementioned method is performed as an encoding operation when encoding a video image block by predicting an omnidirectional video image block using motion compensation, wherein the aforementioned method is used for motion compensation.

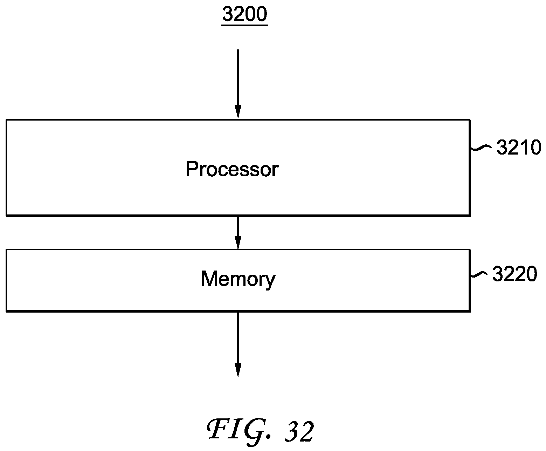

One embodiment of an apparatus for improved motion compensation in omnidirectional video is shown in Figure 32. The apparatus 3200 comprises Processor 3210 connected in signal communication with Memory 3220. At least one connection between Processor 3210 and Memory 3220 is shown, which is shown as bidirectional, but additional unidirectional or bidirectional connections can connect the two. Processor 3210 is also shown with an input port and an output port, both of unspecified width. Memory 3220 is also shown with an output port. Processor 3210 executes commands to perform the motion compensation of Figure 31.

This embodiment can be used in an encoder or a decoder to, respectively, encode or decode a video image block by predicting an omnidirectional video image block using motion compensation, wherein motion compensation comprises the steps of Figure 31. This embodiment can also be used in the systems shown in Figure 1 through Figure 12.

The functions of the various elements shown in the figures can be provided through the use of dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read-only memory ("ROM") for storing software, random access memory ("RAM"), and non-volatile storage.

Other hardware, conventional and/or custom, can also be included. Similarly, any switches shown in the figures are conceptual only. Their function can be carried out through the operation of program logic, through dedicated logic, through the interaction of program control and dedicated logic, or even manually, the particular technique being selectable by the implementer as more specifically understood from the context.

The present description illustrates the present principles. It will thus be appreciated that those skilled in the art will be able to devise various arrangements that, although not explicitly described or shown herein, embody the present principles and are included within its spirit and scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which can be substantially represented in computer readable media and so executed by a computer or processor, whether or not such computer or processor is explicitly shown.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

In conclusion, the preceding embodiments have shown an improvement in the coding efficiency resulting from improving the motion vector compensation process of omnidirectional videos which use a mapping *f* to map the frame F to encode to the surface *S* which is used to render a frame. Additional embodiments can easily be conceived based on the aforementioned principles.

## Claims

1. Method for decoding a video image block by predicting an omnidirectional video image block using motion compensation, wherein motion compensation comprises:

   computing block corners of said video image block using a block center point and a block height and width;
   obtaining an image of corners and a center point of said video image block on a parametric surface by using a block warping function on said computed block corners;
   obtaining three dimensional corners by transformation from corners on said parametric surface to a three dimensional surface;
   obtaining three dimensional offsets of each three dimensional corner of the block relative to the center point of the block on the three dimensional surface;
   computing an image of the motion compensated block on said parametric surface by using said block warping function and on a three dimensional surface by using said transformation and a motion vector for the video image block;
   computing three dimensional coordinates of said video image block's motion compensated corners using said three dimensional offsets; and
   computing an image of said motion compensated corners from a reference frame by using an inverse block warping function and inverse transformation.

2. Apparatus for decoding a video image block, comprising:

   a memory; and,
   a processor, configured to decode said video image block by predicting an omnidirectional video image block using motion compensation, wherein motion compensation comprises:

   computing block corners of said video image block using a block center point and a block height and width;
   obtaining an image of corners and a center point of said video image block on a parametric surface by using a block warping function on said computed block corners;
   obtaining three dimensional corners by transformation from corners on said parametric surface to a three dimensional surface;

obtaining three dimensional offsets of each three dimensional corner of the block relative to the center point of the block on the three dimensional surface;

computing an image of the motion compensated block on said parametric surface by using said block warping function and on a three dimensional surface by using said transformation and a motion vector for the video image block;

computing three dimensional coordinates of said video image block's motion compensated corners using said three dimensional offsets; and

computing an image of said motion compensated corners from a reference frame by using an inverse block warping function and inverse transformation.

3. Apparatus for decoding a video image block comprising means for:

decoding said video image block by predicting an omnidirectional video image block using motion compensation, wherein motion compensation comprises:

computing block corners of said video image block using a block center point and a block height and width;

obtaining an image of corners and a center point of said video image block on a parametric surface by using a block warping function on said computed block corners;

obtaining three dimensional corners by transformation from corners on said parametric surface to a three dimensional surface;

obtaining three dimensional offsets of each three dimensional corner of the block relative to the center point of the block on the three dimensional surface;

computing an image of the motion compensated block on said parametric surface by using said block warping function and on a three dimensional surface by using said transformation and a motion vector for the video image block;

computing three dimensional coordinates of said video image block's motion compensated corners using said three dimensional offsets; and

computing an image of said motion compensated corners from a reference frame by using an inverse block warping function and inverse transformation.

4. Method for encoding a video image block by predicting an omnidirectional video image block using motion compensation, wherein motion compensation, comprises:

computing block corners of said video image block using a block center point and a block height and width;

obtaining an image of corners and a center point of said video image block on a parametric surface by using a block warping function on said computed block corners;

obtaining three dimensional corners by transformation from corners on said parametric surface to a three dimensional surface;

obtaining three dimensional offsets of each three dimensional corner of the block relative to the center point of the block on the three dimensional surface;

computing an image of the motion compensated block on said parametric surface by using said block warping function and on a three dimensional surface by using said transformation and a motion vector for the video image block;

computing three dimensional coordinates of said video image block's motion compensated corners using said three dimensional offsets; and

computing an image of said motion compensated corners from a reference frame by using an inverse block warping function and inverse transformation.

5. Apparatus for encoding a video image block, comprising:

a memory; and,

a processor, configured to encode said video image block by predicting an omnidirectional video image block using motion compensation, wherein motion compensation comprises:

computing block corners of said video image block using a block center point and a block height and width;

obtaining an image of corners and a center point of said video image block on a parametric surface by using a block warping function on said computed block corners;

obtaining three dimensional corners by transformation from corners on said parametric surface to a three dimensional surface;

obtaining three dimensional offsets of each three dimensional corner of the block relative to the center point of the block on the three dimensional surface;

computing an image of the motion compensated block on said parametric surface by using said block warping function and on a three dimensional surface by using said transformation and a motion vector for the video image block;

computing three dimensional coordinates of said video image block's motion compensated corners using said three dimensional offsets; and

computing an image of said motion compensated corners from a reference frame by using an inverse block warping function and inverse transformation.

6. Apparatus for encoding a video image block comprising means for:

encoding said video image block by predicting an omnidirectional video image block using motion compensation, wherein motion compensation, comprises:

computing block corners of said video image block using a block center point and a block height and width;

obtaining an image of corners and a center point of said video image block on a parametric surface by using a block warping function on said computed block corners;

obtaining three dimensional corners by transformation from corners on said parametric surface to a three dimensional surface;

obtaining three dimensional offsets of each three dimensional corner of the block relative to the center point of the block on the three dimensional surface;

computing an image of the motion compensated block on said parametric surface by using said block warping function and on a three dimensional surface by using said transformation and a motion vector for the video image block;

computing three dimensional coordinates of said video image block's motion compensated corners using said three dimensional offsets; and

computing an image of said motion compensated corners from a reference frame by using an inverse block warping function and inverse transformation.

7. Method according to either Claims 1 or Claim 4, further comprising:

performing motion compensation on additional pixels within a group of pixels, in addition to block corners.

8. Apparatus according to either Claim 2 or Claim 5, further comprising:

said processor, configured to also perform motion compensation on additional pixels within a group of pixels, in addition to block corners.

9. Method of Claim 7 or apparatus of claim 8, wherein each group of pixels has its own motion vector.

10. Method of Claim 9 or apparatus of claim 9, wherein the motion vector is expressed in polar coordinates.

11. Method of Claim 9 or apparatus according to claim 9, wherein the motion vector is expressed using affine parameterization.

12. Apparatus according to either Claims 3 or Claim 6, further comprising:

performing motion compensation on additional pixels within a group of pixels, in addition to block corners.

13. A computer program comprising software code instructions for performing the methods according to any one of claims 1, 4, 7, 9, 11, when the computer program is executed by one or several processors.

**14.** An immersive rendering device comprising an apparatus for decoding a bitstream representative of a video according to one of claims 2 or 3.

**15.** A system for immersive rendering of a large field of view video encoded into a bitstream, comprising at least:

- a network interface (600) for receiving said bitstream from a data network,
- an apparatus (700) for decoding said bitstream according to claim 2 or 3,
- an immersive rendering device (900).

*FIG. 1*

*FIG. 2*

EP 3 301 643 A1

FIG. 3

FIG. 4

701

705

70

Internet

Smartphone

30 — User Inputs

Sensors — 20

*FIG. 5*

GW

Internet

80

30 — User Inputs

Sensors — 20

*FIG. 6*

FIG. 7

FIG. 8

FIG. 9

FIG. 10

70

702

Communication
I/f

Smartphone
Housing — 705

Optics — 704

*FIG. 11*

80                    802

806

Communication
I/f

Display — 801

Processing — 804

Memory — 805

Touchpad

Camera

*FIG. 12*

803

FIG. 13

FIG. 14

FIG. 15

FIG. 16

Flattenable Surface    Conic Surface    Cylindrical Surface

*FIG. 17*

*FIG. 18*

FIG. 19

FIG. 20

FIG. 21(A)          FIG. 21(B)          FIG. 21(C)          FIG. 21(D)

EP 3 301 643 A1

FIG. 22

*FIG. 23*

*FIG. 24*

Affine Transformation

Local Affine Transformation

3D Mapping

3D Displacement

Mapping Back

*FIG. 25*

Motion vectors of left
and above neighboring
sub-blocks are used in
OBMC of $P_{N3}$

Motion vectors of left
and above neighboring
sub-blocks are used in
OBMC of $P_{N1}$

Motion vectors of
four neighboring
sub-blocks are used
in OBMC of $P_N$

sub-blocks $P_{N3}$

sub-blocks $P_{N1}$

sub-blocks $P_N$

Motion vectors of
left neighboring
sub-blocks are used
in OBMC of $P_{N2}$

PU1

PU2

Current CU

sub-blocks $P_{N2}$

(a) sub-blocks at
CU/PU boundary

(b) Sub-PUs in ATMVP mode

sub-blocks where
OBMC applies

*FIG. 26*

EP 3 301 643 A1

P"    Q"                    G

P'    Q'

S

Full Computation

P"

P'    Q'

S

Approximation

*FIG. 27*

Layout1    Layout2

FIG. 28

FIG. 29

Layout2

FIG. 30

3100

( Start )

Compute block corners using a block center
point and block height and width — 3110

Determine image corners and center point
on a parametric surface — 3120

Determine 3D corners from transformation of
a parametric surface to 3D surface — 3130

Determine 3D offsets of corners to
center point — 3140

Compute MC block on parametric surface and
on 3D surface — 3150

Compute 3D coordinates of MC block's corners
using 3D offsets — 3160

Compute image of MC corners from a reference
Frame by inverse warping and inverse transform — 3170

FIG. 31

3200

Processor — 3210

Memory — 3220

*FIG. 32*

**EUROPEAN SEARCH REPORT**

Application Number

EP 16 30 6267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2016/076680 A1 (SAMSUNG ELECTRONICS CO LTD [KR]) 19 May 2016 (2016-05-19) * the whole document * | 1-15 | INV. G06T7/20 G06T7/246 G06T7/292 H04N19/51 H04N19/176 H04N19/597 |
| A | Ingo Bauermann ET AL: "H.264 BASED CODING OF OMNIDIRECTIONAL VIDEO" In: "Computer Vision and Graphics", 1 January 2006 (2006-01-01), Kluwer Academic Publishers, Dordrecht, XP055320200, ISBN: 978-1-4020-4178-5 vol. 32, pages 209-215, DOI: 10.1007/1-4020-4179-9_30, * the whole document * | 1-15 | |
| A | Ramin Ghaznavi Youvalari: "360-Degree Panoramic Video Coding", , 1 August 2016 (2016-08-01), XP055340257, Retrieved from the Internet: URL:http://dspace.cc.tut.fi/dpub/bitstream /handle/123456789/24326/ghaznavi.pdf?seque nce=1&isAllowed=y [retrieved on 2017-01-30] * the whole document * | 1-15 | |

TECHNICAL FIELDS SEARCHED (IPC)

G06T
H04N

The present search report has been drawn up for all claims

| Place of search | Date of completion of the search | Examiner |
|---|---|---|
| Munich | 31 January 2017 | Ernst, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 16 30 6267

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2017

| Patent document cited in search report | Publication date | Patent family member(s) | Publication date |
|---|---|---|---|
| WO 2016076680 A1 | 19-05-2016 | US 2016142697 A1<br>WO 2016076680 A1 | 19-05-2016<br>19-05-2016 |

EPO FORM P0459

For more details about this annex : see Official Journal of the European Patent Office, No. 12/82